# DEMANDE DE BREVET EUROPEEN

(11) **EP 1 232 938 A1**
(43) Date de publication de la demande: **21.08.2002**
(21) Numéro de dépôt: 02356030.3
(22) Date de dépôt: 19.02.2002
(51) Int. Cl.: B62K 3/00, B62M 23/02, B62M 13/04

(54) **Kit de motorisation pour véhucule léger et trottinette equipée d'un tel kit**

(30) Priorité: 20.02.2001 FR 0102284
(71) Demandeur: Reynaud, Guilhem, 01700 Miribel (FR)
(72) Inventeur: Reynaud, Guilhem, 01700 Miribel (FR)
(74) Mandataire: Vuillermoz, Bruno

(57) **Abrégé**

Ce kit de motorisation pour véhicule léger est du type comportant un moteur électrique d'appoint (6) entraînant l'une (4) au moins des roues du véhicule léger.

L'alimentation en énergie électrique dudit moteur est constituée par une ou plusieurs batteries délocalisées, portées non pas par ledit véhicule, mais par l'utilisateur, et électriquement connectées directement ou indirectement au moteur par le biais d'un cordon électrique de sécurité déconnectable.

Applications aux trottinettes, patins à roulettes et skate boards.

## Description

L'invention concerne un kit de motorisation pour véhicules légers, du type trottinette, patins à roulettes, notamment en ligne, voire planches à roulettes, mieux connues sous l'expression en langue anglaise « skate board ». Ce kit de motorisation met en oeuvre un moteur d'appoint susceptible ainsi de remplacer ou de compléter la propulsion dudit véhicule par l'utilisateur.

L'invention est plus particulièrement décrite et revendiquée en liaison avec une trottinette.

On connaît les trottinettes depuis fort longtemps, et celles-ci ont récemment connu un regain d'intérêt, compte tenu de leur restylisation, et surtout de leur caractère pliable et portable.

On a également proposé d'adjoindre un moteur à de telles trottinettes, afin de faciliter leur progression. On a ainsi décrit dans le document WO 98/46475 une trottinette pliable du type en question, munie d'un moteur électrique, assurant l'entraînement de la roue arrière par l'intermédiaire d'une chaîne ou courroie, ou équivalent.

Si certes, cette trottinette présente ainsi l'avantage d'une progression facilitée, en revanche, la mise en oeuvre du moteur d'une part et des batteries l'alimentant d'autre part, grèvent de manière significative son poids, de sorte que quand bien même celle-ci demeure portable, elle s'avère d'un poids trop important pour être réellement portée.

L'objet de l'invention est de pallier cet inconvénient, en proposant un kit de motorisation, adaptable notamment sur une trottinette pliable du type en question, mais également sur des patins à roulettes, en ligne ou non, ou sur une planche à roulettes de type skate board, susceptible d'assurer la motorisation dudit véhicule, sans pour autant grever son poids et par ailleurs, en proposant une motorisation plus adéquate à ce type de véhicule.

Ce kit de motorisation comporte un moteur électrique d'appoint entraînant l'une au moins des roues du véhicule léger, et dont l'alimentation en énergie électrique est constituée par une ou plusieurs batteries délocalisées, portées non pas par ledit véhicule, mais par l'utilisateur, et électriquement connectées directement ou indirectement au moteur par le biais d'un cordon électrique de sécurité déconnectable.

Avantageusement, le moteur est débrayable.

Plus spécifiquement, et ainsi que déjà dit, l'invention est plus particulièrement adaptée à une trottinette. Cette trottinette du type comportant au moins une roue avant, une roue arrière simple ou des roues arrières jumelées, un guidon ou manche permettant l'orientation de la ou des roues avant, et un châssis reliant ces différents éléments et comportant une plate-forme d'appui et de positionnement de l'utilisateur, est également munie d'un moteur électrique d'appoint entraînant la ou les roues arrières de la trottinette au moyen d'un galet de friction, et dont l'alimentation en énergie électrique est constituée par une ou plusieurs batteries délocalisées, portées non pas par la trottinette, mais par l'utilisateur, et électriquement connectées directement ou indirectement au moteur par le biais d'un cordon électrique de sécurité déconnectable.

Avantageusement, le galet moteur est débrayable, la commande d'embrayage étant située au niveau du guidon ou de la plate-forme d'appui.

Par ailleurs, selon une autre caractéristique de l'invention, le cordon électrique de sécurité est connecté soit sur le guidon, soit directement sur le moteur.

La manière dont l'invention peut être réalisée et les avantages qui en découlent ressortiront mieux des exemples de réalisation qui suivent, donnés à titre indicatif et non limitatif, à l'appui des figures annexées.
La figure 1 est une représentation schématique de la trottinette conformément à une forme de réalisation de l'invention ;
La figure 2 est une vue analogue à la figure 1 d'une variante de l'invention ;
La figure 3 est une vue de détail de la roue arrière de la trottinette conforme à l'invention en vue latérale ;
La figure 4 est une vue analogue à la figure 3 en vue arrière ;
La figure 5 est une vue schématique en perspective de la roue arrière munie du moteur.

Ainsi que déjà dit, l'invention est plus particulièrement décrite en liaison avec une trottinette. Cependant, elle ne saurait se limiter à cette seule application, et le kit de motorisation décrit est adaptable à tous type de véhicule léger, et notamment à des patins à roulettes en ligne ou non, voire à un skate board, seul le type de moteur ou d'entraînement variant, ledit moteur étant alors avantageusement intégré dans l'une des roues du patin à roulettes ou du skate board.

La trottinette conforme à l'invention présente fondamentalement un châssis (1), constituant la zone de positionnement de l'utilisateur, et fixé en partie amont à une tige télescopique (2), repliable, à l'extrémité supérieure de laquelle est solidarisé le guidon (3). L'autre extrémité de la tige (2) reçoit une roue avant (5), montée libre en rotation.

Dans une variante de l'invention, la trottinette peut comporter deux roues avants, telle que par exemple les trottinettes commercialisées sous la marque déposée « KICKBOARD ».

Le châssis comporte en outre une roue arrière (4), également susceptible d'être libre en rotation. Cette roue arrière peut être du type jumelée.

Cette trottinette est pliable, et notamment est réalisée en aluminium ou en acier, et est en soi largement connue, de sorte qu'il n'y a pas lieu de la décrire plus en détail.

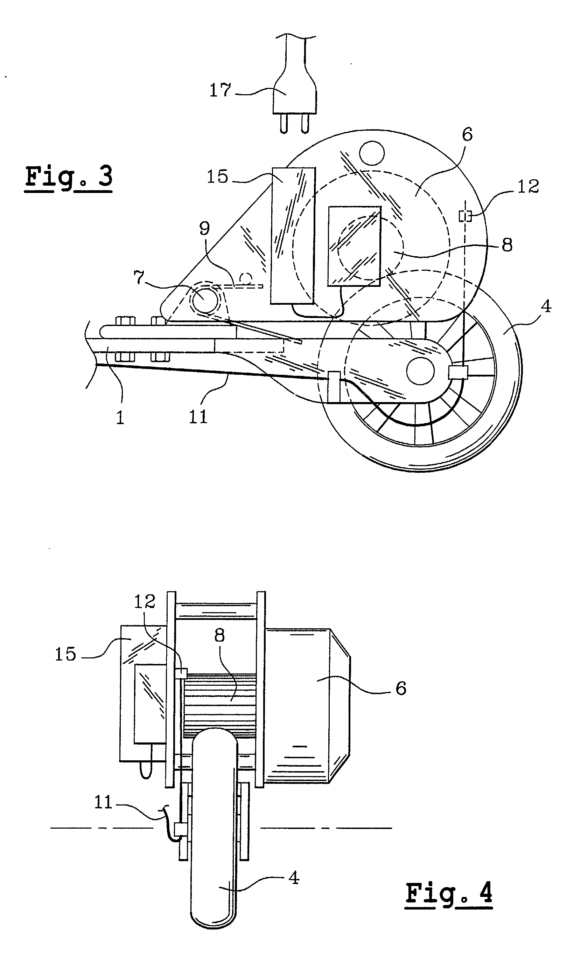

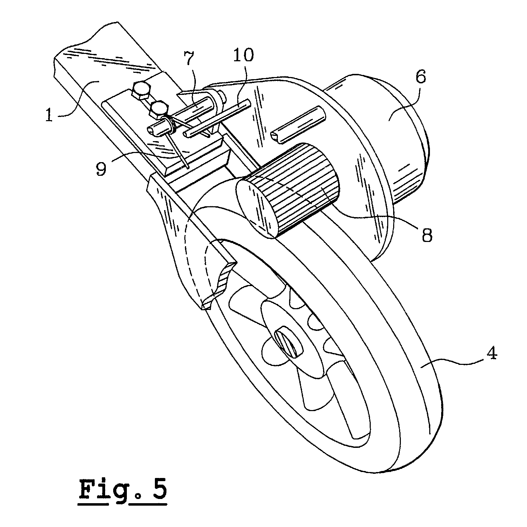

Cette trottinette reçoit un moteur électrique (6), venant se positionner au niveau de la roue arrière (4), ainsi qu'on peut bien l'observer notamment sur les figures 3, 4 et 5.

Ce moteur électrique est intégré dans un carter, articulé sur le châssis (1) au niveau d'un axe d'articulation (7), parallèle à l'axe de rotation de la roue (4). L'axe d'articulation (7) est positionné juste en amont de la roue arrière (4), et dans un plan horizontal situé au dessus du plan constitué par la plate-forme d'appui et de positionnement de l'utilisateur sur la trottinette. Ce moteur (6) entraîne en rotation directement ou par le biais d'un motoréducteur un galet presseur (8), venant prendre appui en l'espèce sur la roue arrière (4). De la sorte, le moteur (6) et donc le galet (8), peuvent être embrayés ou débrayés, en fonction du choix de l'utilisateur.

Pour ce faire, le carter intégrant le moteur (6) est soumis, en l'absence de contrainte extérieure, à l'action d'une ressort (9), fixé à l'axe d'articulation (7) dudit carter, et prenant appui respectivement sur le châssis (1) et sur une patte (10), solidaire du carter, induisant le relevage de ce dernier, et partant le débrayage du moteur donc du galet. En d'autres termes, en l'absence de contrainte extérieure, la roue arrière est en roue libre.

La trottinette est munie d'un câble d'embrayage (11) dudit moteur (6), actionnable depuis le guidon (3) (main droite ou main gauche) ou depuis une pédale (non représentée), montée sur la plate-forme de positionnement de l'utilisateur, et venant se fixer au carter au niveau d'une patte de fixation (12). L'actionnement de ce câble induit l'abaissement du carter donc du galet (8), et sa mise en contact avec la roue arrière (4) de la trottinette. Par voie de conséquence, la roue arrière (4) peut être parfaitement en roue libre, lorsque le moteur est débrayé.

Afin d'optimiser l'action de ce galet (8), cette roue arrière (4) peut être de diamètre variable ou être munie d'un pneumatique.

Le moteur mis en oeuvre est un moteur à courant continu du type à aimants permanents ou réalisé selon la technologie « BRUSHLESS », d'une puissance typique comprise entre 150 et 250 watts.

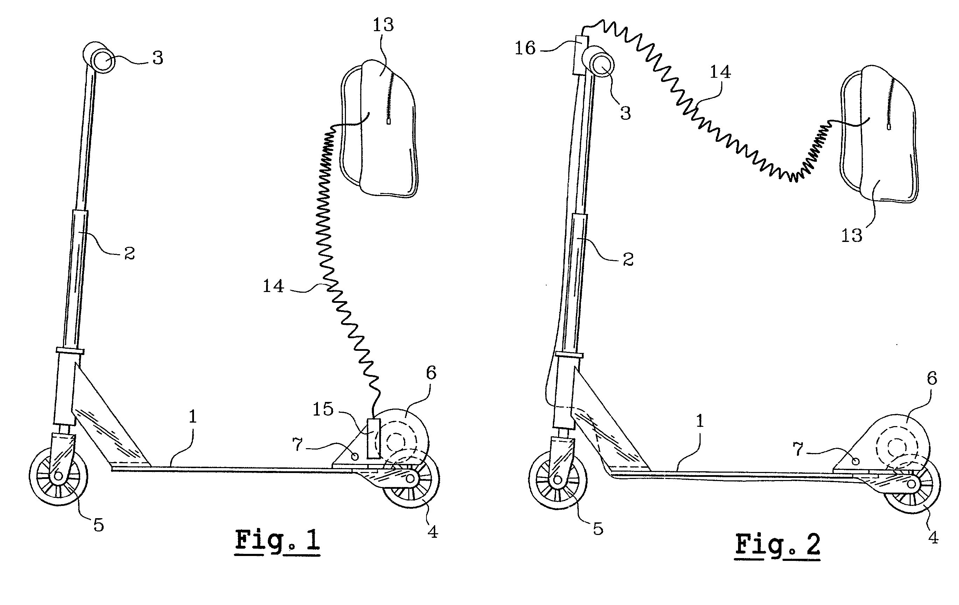

Selon une caractéristique de l'invention, ce moteur électrique est alimenté en énergie au moyen d'une ou plusieurs batteries délocalisées et portées par l'utilisateur lui-même, par exemple dans un sac à dos (13), ou à la ceinture type cartouchière ou « banane », ou équivalent, bref non portées par la trottinette elle-même. De ces batteries, est issu un cordon d'alimentation (14), dont l'extrémité (17) vient s'enficher dans une prise de branchement soit au niveau (16) du guidon (3) (figure 2), soit directement au niveau (15) du carter moteur (6) (figure 1), ce cordon étant de type sécurité et donc déconnectable. En d'autres termes, en cas de chute ou analogue, il est susceptible de se déconnecter plus facilement, et par voie de conséquence, le moteur électrique est stoppé immédiatement.

Selon une caractéristique avantageuse de l'invention, le sac à dos (13) de l'utilisateur peut en outre intégrer un chargeur (non représenté), propre à ainsi disposer sur place d'une source additionnelle d'énergie pour recharger les batteries.

Selon l'invention, la trottinette comporte un contacteur, situé au niveau de la plate-fonne d'appui (1) qui, en l'absence de sollicitation notamment par le pied de l'utilisateur, interdit le démarrage du moteur notamment par inadvertance.

Ainsi, l'entraînement effectif de la trottinette résulte-t'il d'une double commande simultanée et volontaire, à savoir l'embrayage (par la commande située au niveau du guidon ou au niveau de la plate forme d'appui), et le contacteur électrique, situé également au niveau de la plate forme d'appui.

Par ailleurs, le dispositif comporte un frein moteur fonctionnant soit par court-circuit, soit par simple pression volontaire du pied de l'utilisateur sur le moteur. Ainsi, si le contacteur électrique n'est pas actionné, en l'espèce par le pied de l'utilisateur, le moteur est en court-circuit et se comporte comme un frein.

On conçoit qu'avec la trottinette conforme à l'invention, on optimise son utilisation, notamment dès lors que l'on souhaite la porter. En effet, compte tenu du fait qu'aucune batterie ou système d'alimentation électrique n'est porté par la trottinette elle-même, on divise sensiblement son poids par deux. Certes, ces batteries ou sources d'énergie sont toujours portées par l'utilisateur, mais à un autre endroit, typiquement au niveau d'un sac à dos ou d'une « banane », de telle sorte que l'on aboutit à une répartition des charges plus homogène et plus équilibrée, moins fatiguante et partant, plus ergonomique pour l'utilisateur.

On conçoit également aisément l'adaptation possible du kit de motorisation mis en oeuvre pour cette trottinette avec d'autres types de véhicules légers, et notamment les patins à roulettes, en ligne ou non, et les skate boards, mais également tout type de trottinette, ancienne ou de conception plus récente, à deux ou plusieurs roues, et sur tout type de roues : diamètres variables, gonflables ou pleines.

Dans ces adaptations, seule la double commande n'est éventuellement pas mise en oeuvre.

## Revendications

1. Kit de motorisation pour véhicule léger, du type comportant un moteur électrique d'appoint (6) entraînant l'une (4) au moins des roues du véhicule léger, ***caractérisé* en ce que** l'alimentation en énergie électrique dudit moteur est constituée par une ou plusieurs batteries délocalisées, portées non pas par ledit véhicule, mais par l'utilisateur, et électriquement connectées directement ou indirectement au moteur par le biais d'un cordon électrique de sécurité déconnectable.

2. Kit de motorisation pour véhicule léger selon la revendication 1, ***caractérisé* en ce que** le moteur est débrayable.

3. Trottinette du type comportant au moins une roue avant (5), une roue arrière (4) simple ou deux roues arrières jumelées, un guidon ou manche (3) permettant l'orientation de la ou des roues avants (5), et un châssis (1) reliant ces différents éléments et faisant fonction de plate-forme d'appui et de positionnement de l'utilisateur, ladite trottinette comportant en outre un moteur électrique d'appoint (6) entraînant la ou les roues arrières (4) au moyen d'un galet de friction (8) susceptible de prendre appui sur la ou lesdites roues arrières (4), ***caractérisée* en ce que** l'alimentation en énergie électrique dudit moteur (6) est constituée par une ou plusieurs batteries délocalisées, portées non pas par la trottinette mais par l'utilisateur, et électriquement connectées directement ou indirectement au moteur (6) par le biais d'un cordon électrique (14).

4. Trottinette selon la revendication 3, ***caractérisée* en ce que** le cordon électrique est de sécurité, et est déconnectable de sa prise de branchement (15, 16) située sur le guidon (3) ou sur le carter intégrant le moteur électrique (6).

5. Trottinette selon l'une des revendications 3 et 4, ***caractérisée* en ce que** le galet moteur (8) est débrayable, permettant une roue libre totale, la commande d'embrayage étant située au niveau du guidon ou manche (3) ou de la plate-forme d'appui (1).

6. Trottinette selon l'une des revendications 3 à 5, ***caractérisée* en ce que** le moteur (6) est relié à un contacteur électrique, actionnable par l'utilisateur, et dont le défaut d'actionnement interdit le fonctionnement.

7. Trottinette selon l'une des revendications 3 à 6, ***caractérisée* en ce que** le carter intégrant le moteur (6) et le galet (8) est articulé sur le châssis (1) au niveau d'un axe d'articulation (7), parallèle à l'axe de rotation de la roue arrière (4) et positionné juste en amont de ladite roue.

8. Trottinette selon la revendication 7, ***caractérisée* :**
• **en ce que** le carter intégrant le moteur (6) est soumis, en l'absence de contrainte extérieure, à l'action d'une ressort (9), fixé à l'axe d'articulation (7) dudit carter, et prenant appui respectivement sur le châssis (1) et sur une patte (10), solidaire du carter, induisant le relevage de ce dernier, et partant le débrayage du moteur donc du galet (8);
• et **en ce que** le carter est connecté à un câble d'embrayage (11), actionnable depuis le guidon ou manche (3) ou depuis une pédale montée sur la plate-forme (1) de positionnement de l'utilisateur, susceptible d'induire l'abaissement du carter donc du galet (8), et sa mise en contact avec la roue arrière (4) de la trottinette.

9. Trottinette selon l'une des revendications 7 et 8, ***caractérisée* en ce que** l'axe d'articulation (7) du carter sur le châssis (1) est localisé dans un plan horizontal situé au dessus du plan constitué par la plate-forme d'appui et de positionnement de l'utilisateur sur la trottinette.
